# FASCICULE DE BREVET EUROPEEN

(11) **EP 2 903 867 B1**
(45) Date de publication et mention de la délivrance du brevet: **19.06.2019**
(21) Numéro de dépôt: 13782731.7
(22) Date de dépôt: 24.09.2013
(51) Int. Cl.: B60R 25/24

(54) **SYSTEME DE PROTECTION D'UN VEHICULE AUTOMOBILE**
SCHUTZSYSTEM FÜR EIN KRAFTFAHRZEUG
SYSTEM FOR PROTECTING A MOTOR VEHICLE

(30) Priorité: 05.10.2012 FR 1259499
(43) Date de publication de la demande: 12.08.2015
(73) Titulaire: Renault S.A.S., 92100 Boulogne-Billancourt (FR)
(72) Inventeur: MONTHEL, Nicolas, F-78000 Versailles (FR); CHEVALIER, Pascal, F-75014 Paris (FR); BUZO, Claude, F-92700 Colombes (FR); SINTES, Olivier, F-92140 Clamart (FR)
(86) Numéro de dépôt international: PCT/FR2013/052217
(87) Numéro de publication internationale: WO 2014/053734

(56) Documents cités:
- WO-A2-2007/106875
- US-B1- 6 850 153

## Description

L'invention a pour domaine technique la protection de véhicule automobile en général et notamment la protection d'une flotte de véhicules automobiles partagés.

Les systèmes classiques de protection de véhicule individuel, comprennent une clé de contact qui suffit pour débloquer et faire démarrer le véhicule.

Ces systèmes de protection ne sont pas adaptés aux véhicules partagés pour lesquels la protection par clé n'est pas suffisante. En effet, la clé de contact d'un véhicule partagé n'est par définition pas personnelle et n'est pas conservée dans un endroit protégé. Par exemple, elle est conservée dans la boîte à gants du véhicule, à l'intérieur de l'habitacle. Dans ce cas, si l'on utilise un système classique de protection de véhicule individuel, il suffit d'entrer dans l'habitacle par exemple en cassant la vitre pour faire démarrer le véhicule.

Il est connu d'utiliser dans les systèmes d'auto partage actuels, un relai qui est ouvert pour empêcher le démarrage du véhicule même avec la clé de contact. Cela étant, un trombone suffit pour casser cette protection.

Il est connu de la demande de brevet US6618650, un système anti démarrage de véhicule comportant un lecteur de carte d'identification situé dans l'habitacle et un moyen d'identification du véhicule vers un serveur d'auto partage afin de déterminer si le client est bien le client légitime pour le véhicule. Ce système commande le démarrage seulement si la condition d'identification du client est remplie et si la clé dans le lecteur de carte correspond, si l'une de ces deux conditions n'est pas remplie alors le véhicule ne démarre pas.

L'un des inconvénients de ce système est qu'il nécessite une reconnaissance de l'identité du client par un support physique. La reconnaissance par support physique implique en effet, un coût lié au système de reconnaissance du support physique dans le véhicule. Cette reconnaissance implique également une émission préalable du support physique et un support physique fonctionnel (pas endommagé) et présent (pas oublié).

Par ailleurs, selon la demande de brevet US6618650, la reconnaissance demande une communication dans le sens montant du véhicule vers le serveur d'auto partage puis dans le sens descendant du serveur d'auto partage vers le véhicule. Cet aller-retour peut prendre un certain temps.

Par ailleurs, dans le cas où l'on souhaiterait se passer du serveur d'auto partage et vérifier si l'utilisateur identifié à l'aide du support physique est habilité à utiliser le véhicule dans un moyen de traitement comprenant une base de données situé dans le véhicule, il est probable que cela contrevienne aux obligations légales vis-à-vis d'autorités régulant la vie privée et l'informatique telle que la CNIL (Commission nationale de l'informatique et des libertés) en France par exemple.

L'invention vise à résoudre les problèmes de l'état de la technique mentionnés ci-dessus.

L'invention a pour objet un système de protection d'un véhicule automobile, et un procédé correspondant, selon les revendications indépendantes.

Ainsi, l'identification de l'utilisateur et du véhicule est réalisée par le serveur distant, cela permet d'éviter les problèmes d'émission d'un support physique d'identification mentionnés ci-dessus dans l'art antérieur, cela permet également d'éviter d'avoir un lecteur dans le véhicule. Par ailleurs, l'identification de l'utilisateur et du véhicule d'une part et la réception de l'ordre d'autorisation de serveur peuvent être effectuées avant que l'utilisateur n'entre dans le véhicule. L'utilisateur n'a donc pas besoin d'attendre dans le véhicule l'aller retour entre le serveur distant et le véhicule. La détermination du caractère attribuable d'un véhicule à un utilisateur peut par exemple être réalisée à l'aide d'une base de données selon laquelle un véhicule est affecté à l'utilisateur. Le caractère attribuable peut également être déterminé selon un classement de l'utilisateur d'une part et du véhicule d'autre part, il faut alors que leur deux classements correspondent pour que le véhicule soit attribuable à l'utilisateur.

Par ailleurs, le système de protection peut être intégré dans la chaîne d'anti démarrage existante, aucune faille n'est alors ajoutée.

Selon un mode de réalisation, le serveur distant est configuré pour recevoir des demandes de location de véhicules de la part d'utilisateurs afin de permettre une affectation des véhicules aux utilisateurs en fonction de ces demandes.

Dans un premier mode de réalisation, la base de données est gérée directement par le serveur distant qui va affecter des véhicules aux utilisateurs en fonction des demandes. Cela est avantageux car cela permet une réactivité et une limitation du nombre d'équipements. Dans un second mode de réalisation, le serveur distant doit gérer de nombreuses actions (envoi et réception de message) et il peut être intéressant de déléguer la gestion de la base de données à un serveur dédié. Dans ce cas, le serveur distant va communiquer avec ce serveur dédié pour faire affecter par le serveur dédié des véhicules aux utilisateurs en fonction des demandes.

Selon une caractéristique, le serveur distant est configuré pour émettre l'ordre d'autorisation si, à l'heure de réception du message, le véhicule identifié par le deuxième moyen d'identification est affecté à l'utilisateur identifié par le premier moyen d'identification.

Ainsi, le serveur distant ne permet l'utilisation d'un véhicule que si le véhicule identifié a déjà été affecté à l'utilisateur identifié.

Selon un mode de réalisation, le message est envoyé à l'aide du téléphone portable de l'utilisateur, le premier moyen d'identification étant le numéro de téléphone du téléphone portable de l'utilisateur et le deuxième moyen d'identification étant un numéro d'identification du véhicule ou une photo d'une partie du véhicule.

Ainsi, cette solution est très simple à mettre en oeuvre. Le numéro de téléphone de l'utilisateur est une donnée fiable puisque le téléphone portable de l'utilisateur est un objet personnel.

Selon une caractéristique, les moyens de communication équipant le véhicule sont configurés pour transmettre après réception dudit ordre d'autorisation de serveur un ordre de déverrouillage auxdits moyens de déverrouillage, les moyens de déverrouillage étant configurés pour envoyer un ordre d'arrêt de protection au système de contrôle seulement s'ils reçoivent l'ordre de déverrouillage.

Le système de contrôle du moteur comprend en général un verrou logiciel qui peut être désactivé avec l'ordre d'arrêt de protection. Ainsi, à l'aide de cet ordre d'arrêt de protection, les moyens de déverrouillage peuvent contrôler le démarrage du moteur. Les moyens de déverrouillage peuvent être configurés pour émettre l'ordre d'arrêt de protection seulement si plusieurs conditions cumulatives sont réalisées parmi lesquelles la réception de l'ordre de déverrouillage.

Selon un mode de réalisation, les moyens de déverrouillage du système de contrôle sont configurés pour déverrouiller l'habitacle du véhicule lorsqu'ils reçoivent l'ordre de déverrouillage.

Ainsi, l'utilisateur peut entrer dans le véhicule après l'identification par le serveur distant de l'utilisateur et du véhicule à louer.

Selon l'invention, le serveur distant peut être authentifié auprès des moyens de déverrouillage, les moyens de déverrouillage étant configurés pour envoyer l'ordre d'arrêt de la protection au système de contrôle seulement si le serveur distant est authentifié.

Grace à l'authentification, on obtient une sécurité accrue puisqu'on évite la situation selon laquelle un pirate se fait passer pour le serveur distant auprès des moyens de déverrouillage.

Selon un mode de réalisation, pour authentifier le serveur distant auprès des moyens de déverrouillage, le serveur distant est authentifié auprès des moyens de communication puis les moyens de communication sont authentifiés auprès des moyens de déverrouillage.

Ainsi, on obtient une chaîne de confiance allant du serveur distant aux moyens de déverrouillage.

Selon un mode de réalisation, les moyens de déverrouillage sont authentifiés auprès du système de contrôle du moteur.

Cette authentification permet d'augmenter encore la sécurité puisqu'on évite la situation selon laquelle un utilisateur non accrédité pourrait à l'aide d'un ordinateur branché sur le système de contrôle du moteur essayer de désactiver le verrou logiciel.

Selon un mode de réalisation, le système comprend des moyens de détection d'une clé authentifiée configurés pour émettre un ordre d'autorisation de clé et dans lequel les moyens de déverrouillage sont configurés pour envoyer l'ordre d'arrêt de la protection au système de contrôle seulement s'ils reçoivent l'ordre d'autorisation de clé.

Ainsi, le système de protection permet une protection supplémentaire et cumulative à la protection à l'aide de la clé. En adaptant le système de déverrouillage et en ajoutant les moyens de communication, le système de protection s'intègre dans la chaîne d'anti démarrage existante, aucune faille n'est ajoutée.

Avantageusement, le serveur distant peut être configuré pour émettre l'ordre d'autorisation seulement s'il reçoit le message de la part de l'utilisateur. Le message peut être émis par l'utilisateur à partir de moyens de communications tels qu'une borne, une clé électronique, ou un téléphone portable.

Selon un mode de réalisation, l'un au moins des messages est crypté dans l'ensemble comprenant le message de l'utilisateur, l'ordre d'autorisation de serveur, l'ordre de déverrouillage, l'ordre d'autorisation de clé et l'ordre d'arrêt de la protection.

Ainsi, on évite les écoutes et on augmente la sécurité.

Selon un autre aspect, l'invention a pour objet un procédé de protection d'un véhicule automobile équipé d'un moteur comprenant :
- une étape d'émission d'un ordre d'autorisation de serveur émis par un serveur distant ;
- une étape de réception au sein du véhicule de l'ordre d'autorisation de serveur suivi d'une communication pour déverrouiller le système de contrôle du moteur.

Selon une caractéristique générale, le procédé comprend en outre une étape d'émission par l'utilisateur d'un message comprenant un premier moyen d'identification pour identifier l'utilisateur et un deuxième moyen d'identification pour identifier un véhicule, l'étape d'émission de l'ordre d'autorisation n'étant réalisée que si le serveur distant reçoit ledit message comprenant les deux moyens d'identification et si le véhicule identifié par le deuxième moyen d'identification est attribuable à l'utilisateur identifié par le premier moyen d'identification.

D'autres caractéristiques et avantages de l'invention apparaîtront à l'examen de la description détaillée d'un mode de mise en oeuvre et de réalisation, nullement limitatif, et des dessins annexés sur lesquels :
- la figure 1 illustre schématiquement un système de protection d'un véhicule individuel ;
- la figure 2 illustre un système de protection selon l'invention ;
- la figure 3 illustre selon un mode de mise en oeuvre, l'ensemble des étapes d'un procédé de protection d'un véhicule selon l'invention ;
- la figure 4 illustre selon un mode de mise en oeuvre, l'ensemble des étapes d'un procédé d'identification d'un utilisateur selon l'invention ; et
- la figure 5 illustre selon un mode de mise en oeuvre, l'ensemble des étapes d'un procédé d'authentification selon l'invention.

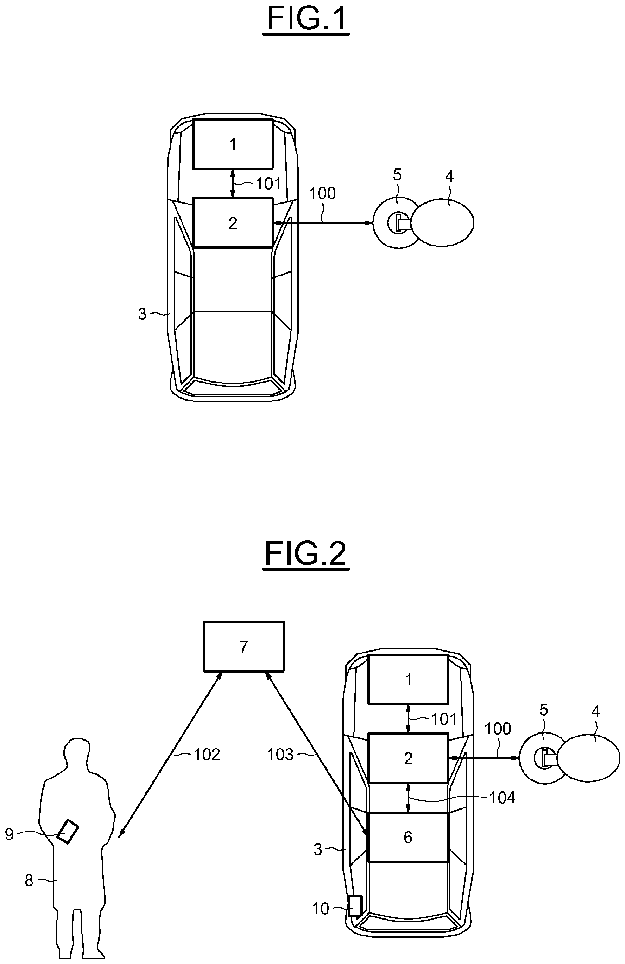

Sur la figure 1, est illustré un véhicule automobile 3, comprenant un moteur et un système 1 de contrôle du fonctionnement de ce moteur. Par exemple, dans le cas d'un moteur thermique, le système de contrôle de fonctionnement gère notamment l'injection de carburant dans le moteur thermique.

Le véhicule 3 comprend également un système 2 de déverrouillage du véhicule. Ce système de déverrouillage est un moyen de détermination des conditions pour démarrage. Il communique avec un verrou logiciel qui est implanté dans le système 1 de contrôle du fonctionnement du moteur et qui peut par exemple bloquer l'injection de carburant dans le moteur thermique. Le système de déverrouillage peut également d'une manière connue être implanté dans le système de contrôle de fonctionnement. Le système 2 de déverrouillage du véhicule est également capable d'ouvrir ou fermer l'habitacle du véhicule 3.

Le véhicule 3 comprend également un dispositif électronique 5 de protection par clé. Ce dispositif 5 comprend un contacteur de démarrage qui reçoit une clé de contact 4.

Selon un mode de mise en oeuvre connu, après son introduction, dans le contacteur de démarrage, la rotation de la clé va permettre l'alimentation électrique d'un démarreur du moteur. Le contacteur de démarrage forme ainsi un verrou mécanique qui permet si la clé ne peut pas être introduite et tournée dans le contacteur de démarrage, la non alimentation du démarreur. Mais selon une variante non représentée, un système d'ouverture et de fermeture dit « main libre », connu de l'homme du métier, peut se substituer au système de clé traditionnelle décrit dans ce mode de réalisation.

La clé de contact comprend en outre une électronique codée qui permet d'émettre un code de clé. Le dispositif électronique 5 de protection est capable de recevoir le code de clé à l'aide d'une bague enroulée autour du contacteur de démarrage et de transmettre un ordre d'autorisation de clé 100 au système de déverrouillage de véhicule. L'ordre d'autorisation de clé est transmis seulement si le dispositif 5 électronique de protection reconnaît le code de clé.

Lorsque le système de déverrouillage du véhicule 2 reçoit l'ordre d'autorisation de clé il émet un ordre de d'arrêt de la protection 101 qui est reçu par le système 1 de contrôle du fonctionnement du moteur. Le verrou logiciel est alors débloqué. Par exemple, tant que le verrou logiciel est bloqué l'injection d'essence est impossible dans le moteur, le démarrage du moteur est donc impossible quand bien même le démarreur est alimenté. Le verrou logiciel agit donc en plus du verrou mécanique. Ainsi, il apparaît que selon le mode de protection illustré sur la figure 1, la clé de contact suffit pour débloquer et démarrer le véhicule.

La figure 2, illustre un système de protection de véhicule 3 selon l'invention. Ce système de protection est particulièrement adapté pour un véhicule partagé utilisé en location. Plus généralement, il est adapté pour tout véhicule pour lequel on considère que la protection par clé de contact ne doit pas être suffisante.

Sur la figure 2, sont illustrés en plus du véhicule 3, de la clé 4, du dispositif électronique 5 de protection qui sont similaires à ceux représentés sur la figure 1, un utilisateur 8 muni d'un téléphone portable 9, un serveur distant 7, un moyen d'identification du véhicule 10, des moyens de communication 6 et un système de déverrouillage du véhicule 2.

Selon l'invention, le système de déverrouillage du véhicule 2 envoie un ordre d'arrêt de protection 101 lorsqu'il reçoit l'ordre d'autorisation de clé 100 et également un ordre de déverrouillage 104 en provenance des moyens de communication 6. Le système de déverrouillage 2 est également configuré pour ouvrir l'habitacle du véhicule lorsqu'il reçoit l'ordre de déverrouillage 104 et pour communiquer avec le verrou logiciel implanté dans le système de contrôle du moteur. Le système de déverrouillage 2 est un moyen de détermination des conditions pour démarrage, mais selon l'invention ces conditions se résument à la réception de deux ordres, l'ordre de déverrouillage 104 émis par les moyens de communication 6 à la réception d'un ordre d'autorisation 103 délivré par le serveur 7 et l'ordre d'autorisation de clé 100. Afin d'améliorer la sécurité du système ces deux ordres peuvent être cryptés. Ainsi, le système de déverrouillage du véhicule 2 ne comprend pas de moyens d'identification de l'utilisateur ni de moyen d'identification du véhicule.

Les moyens de communication 6 sont configurés pour communiquer avec le serveur distant 7, de préférence à l'aide d'un canal de communication sans fil et pour communiquer avec le système de déverrouillage 2. Les moyens de communication 6 comprennent un calculateur d'auto partage qui transmet l'ordre de déverrouillage 104 lorsqu'il reçoit un ordre d'autorisation de serveur 103 en provenance du serveur distant 7. Les moyens de communication 6 ne comprennent pas non plus de moyens d'identification de l'utilisateur ou du véhicule. L'identification de l'utilisateur et la détermination que l'utilisateur est bien autorisé à utiliser le véhicule pour une heure donnée sont en fait réalisées par le serveur distant 7 via l'identification de la clé. L'identification de la clé dans le cylindre va déclencher une demande d'autorisation du système de contrôle du fonctionnement moteur aux moyens de communication 6. Si le dispositif de protection 5 reconnaît la clé, il transmet alors l'ordre d'autorisation de clé 100 ce qui entraîne l'envoi de l'ordre d'arrêt de la protection 101 par le système de déverrouillage 2 et le déblocage du verrou logiciel dans le système de contrôle du moteur 1. Lorsque l'utilisateur tourne la clé, le démarreur est alimenté et du fait du déblocage du verrou logiciel le moteur démarre.

Avantageusement, le serveur distant 7 est authentifié auprès des moyens de communication 6 et les moyens de communication 6 sont authentifiés auprès du système de déverrouillage 2. Ces authentifications sont avantageusement réalisées suivant l'ordre suivant : le serveur distant 7 est authentifié auprès des moyens de communication 6 puis les moyens de communication 6 sont authentifiés auprès du système de déverrouillage 2. On obtient ainsi une chaîne de confiance. Ainsi, l'authentification du serveur distant 7 auprès des moyens de communication 6 suivie de l'authentification des moyens de communication 6 auprès du système de déverrouillage 2 correspond à une authentification du serveur distant auprès du système de déverrouillage 2. On peut également prévoir une authentification du système de déverrouillage 2 auprès du système de contrôle du moteur 1.

Dans le mode de réalisation présenté sur la figure 2, l'ordre d'autorisation 103 est émis par le serveur distant 7 vers les moyens de communication 6 une fois avoir reçu un message sécurisé 102 de la part de l'utilisateur 8 via le téléphone portable 9. Pour cela, par exemple, l'utilisateur 8 va copier, via une photographie ou manuellement, un identifiant du moyen d'identification 10 du véhicule et le transmettre dans le message sécurisé 102 au serveur distant 7. Le serveur distant 7 détermine alors à partir du message sécurisé 102 s'il peut envoyer l'ordre d'autorisation 103 pour cet utilisateur et ce véhicule à l'instant donné en se référant à la réservation de l'utilisateur 8.

L'invention s'applique également lorsque l'ordre d'autorisation 103 est émis de manière automatique par le serveur distant 7 après réception d'un message sécurisé relatif à la réservation du véhicule.

Toutes ces authentifications peuvent être réalisées à l'aide d'une méthode de cryptage classique qui permet d'authentifier l'utilisateur ayant loué le véhicule.

Par exemple, le serveur distant 7 envoie sa signature aux moyens de communication 6 suite à une demande d'authentification de la part des moyens de communication 6 envoyée au serveur distant 7, les moyens de communication 6 envoient leur signature du système de déverrouillage 2 suite à une demande d'authentification de la part du système de déverrouillage 2 envoyée aux moyens de communication 6 et le système de déverrouillage 2 envoie sa signature au système de contrôle du moteur 1 suite à une demande d'authentification de la part du système de contrôle du moteur 1 envoyée au système de déverrouillage 2.

On peut également prévoir que la signature soit ajoutée à l'ordre d'autorisation serveur 103, l'ordre de déverrouillage 104.

Dans ce cas, l'ordre d'autorisation serveur 103 et l'ordre de déverrouillage 104 sont envoyés suite respectivement aux demandes d'authentification de la part des moyens de communication 6, le système de déverrouillage 2.

On peut également prévoir que les échanges entre le système de contrôle du moteur 1 et le système de déverrouillage 2, entre le système de déverrouillage 2 et le dispositif électronique 5 de protection, entre le système de déverrouillage 2 et les moyens de communication, et entre les moyens de communication et le serveur distant sont cryptés.

L'homme du métier pourra pour crypter ces échanges et générer les signatures, utiliser par exemple un système de clés asymétriques (publiques, privées) ou tout autre système de clés cryptés, comme par exemple une clé symétrique.

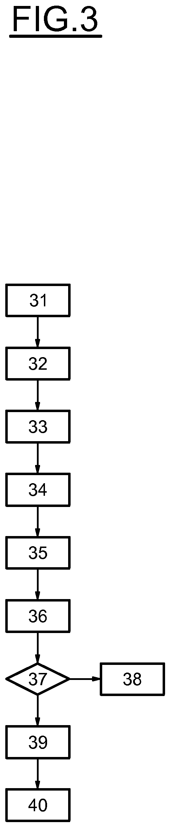

La figure 3 illustre un procédé de protection comprenant 9 étapes, numérotées 31 à 39.

L'étape 31 est une étape de réservation du véhicule. L'étape 32 est une étape de présentation du client devant le véhicule qu'il a réservé.

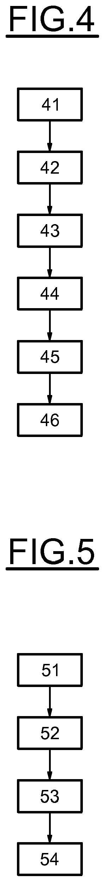

L'étape 33 est une étape d'identification de l'utilisateur et du véhicule. Cette étape est réalisée après que l'utilisateur se soit présenté devant le véhicule à louer. L'étape 33 est décrite ci après en détail dans la figure 4.

L'étape 34 est une étape d'ouverture de l'habitacle du véhicule. En effet, à la fin de l'étape 33, un ordre de déverrouillage 104 est envoyé au système de déverrouillage 2 du véhicule. Suite à cet ordre 104, le système de déverrouillage 2 commande l'ouverture de l'habitacle du véhicule 3.

L'étape 35 est une étape d'authentification du système de déverrouillage 2 auprès du système 1 de contrôle du fonctionnement du moteur. Au cours de l'étape 35, le système de déverrouillage 2 envoie un matériel d'authentification (une signature par exemple) au système de contrôle du moteur 1 suite à une demande d'authentification de la part du système de contrôle du moteur 1 envoyée au système de déverrouillage 2. A l'issu de cette étape 35, le système de déverrouillage 2 est authentifié auprès du système de contrôle 1.

L'étape 36 est une étape d'authentification du serveur distant 7 auprès du système de déverrouillage 2. L'étape 36 est décrite ci après en détail dans la figure 5.

L'étape 37 est une étape de vérification de l'authentification du serveur distant 7. Si le serveur distant 7 est authentifié par le système de déverrouillage 2 alors le procédé se poursuit avec l'étape 39. Sinon, le procédé s'interrompt avec l'étape de fin 38.

L'étape 39 est une étape d'authentification de clé 4. Au cours de cette étape le dispositif de protection 5 va détecter si la clé 4 est authentique. Suite à cette détection, le dispositif 5 envoie un ordre d'autorisation de clé 100.

L'étape 40 est une étape de « dé protection » au cours de laquelle, le système de déverrouillage 2 envoie un ordre d'arrêt de protection 101 au système 1 de contrôle du moteur. Cet ordre 101 entraîne l'ouverture du verrou logiciel.

La figure 4 illustre en détail l'étape 33 de la figure 3.

L'étape 33 d'identification de l'utilisateur et du véhicule comprend les étapes 41 à 46.

L'étape 41 est une étape d'envoi d'un message par l'utilisateur 8 à l'aide de son téléphone portable 9. Ce message comprend un moyen d'identification de l'utilisateur (par exemple le numéro de téléphone de l'utilisateur figurant dans le message) ainsi qu'un moyen d'identification du véhicule (par exemple un numéro). Par exemple, le message est envoyé par l'utilisateur à un numéro de téléphone dédié au service de location. Le message transite alors par le réseau mobile pour arriver au serveur identifié par ce numéro de téléphone. Ce serveur peut être le serveur distant 7 ou un serveur de communication qui va alors relayer ce message vers le serveur distant 7.

L'étape 42 est une étape de réception de ce message par le serveur distant 7.

L'étape 43 est une étape de vérification des moyens d'identification du véhicule et de l'utilisateur. Pour cela, le serveur distant va consulter la base de données des réservations. Si à l'heure de réception du message, le véhicule identifié est affecté à l'utilisateur identifié dans la base de données des réservations, alors le procédé se poursuit avec l'étape 44.

L'étape 44 est une étape d'envoi d'un ordre d'autorisation de serveur 103.

L'étape 45 est une étape de réception et transmission par les moyens de communication 6. A la réception de l'ordre d'autorisation de serveur 103, les moyens de communication 6 transmettent l'ordre de déverrouillage 104.

L'étape 46 est une étape de réception de l'ordre de déverrouillage 104 par le système de déverrouillage 2.

La figure 5 illustre en détail l'étape 36 de la figure 3.

L'étape 36 d'authentification comprend les étapes 51 à 54.

L'étape 51 est une étape de demande d'authentification envoyée de la part du système de déverrouillage 2 vers les moyens de communication 6.

L'étape 52 est une étape de demande d'authentification envoyée de la part des moyens de communication 6 vers le serveur distant 7.

L'étape 53 est une étape d'envoi d'un matériel d'authentification par le serveur distant 7 aux moyens de communication 6. A l'issu de cette étape le serveur distant 7 est authentifié auprès des moyens de communication 6.

L'étape 54 est une étape d'envoi d'un matériel d'authentification par les moyens de communication 6 au système de déverrouillage 2. A l'issu de cette étape les moyens de communication 6 sont authentifiés auprès du système de déverrouillage 2. La chaîne de confiance s'étend donc du système de déverrouillage 2 au serveur distant 7. Ainsi, le serveur distant 7 est authentifié auprès du système de déverrouillage 2. Dans le cas où l'étape 35 est réalisée, la chaîne de confiance s'étend du système de contrôle du fonctionnement du moteur jusqu'au serveur distant 7.

Dans le cas où le matériel d'authentification du serveur distant 7 ou des moyens de communication 6 est une signature envoyée dans l'ordre d'autorisation de serveur 103 ou l'ordre de déverrouillage 104. Les étapes d'envoi de message 44 (ordre d'autorisation de serveur 103) et 45 (ordre de déverrouillage 104) permettent les authentifications des étapes 53 et 54 respectivement. Les demandes d'authentification 51 et 52 devraient donc, dans ce cas, se dérouler avant respectivement l'étape 44 et l'étape 45.

## Revendications

1. Système de protection d'un véhicule automobile (3) équipé d'un moteur comprenant :
- un serveur distant (7) pour émettre un ordre d'autorisation de serveur (103) ;
- un système de contrôle du fonctionnement (1) du moteur ;
- des moyens (2) de déverrouillage du système de contrôle du fonctionnement du moteur ; et
- des moyens de communication (6) équipant le véhicule configurés pour recevoir ledit ordre d'autorisation de serveur (103) et communiquer avec les moyens de déverrouillage (2),
**caractérisé en ce que** le serveur distant (7) est configuré pour émettre l'ordre d'autorisation (103) seulement s'il reçoit un message (102) comprenant un premier moyen d'identification (9) pour identifier l'utilisateur (8) et un deuxième moyen d'identification (10) pour identifier un véhicule (3) et si le véhicule (3) identifié par le deuxième moyen d'identification (10) est attribuable à l'utilisateur (8) identifié par le premier moyen d'identification (9) et **en ce que** le serveur distant peut être authentifié auprès des moyens de déverrouillage (2), les moyens de déverrouillage (2) étant configurés pour envoyer l'ordre d'arrêt de la protection (101) au système de contrôle seulement si le serveur distant (7) est authentifié.

2. Système selon la revendication 1, dans lequel le serveur distant (7) est configuré pour recevoir des demandes de location de véhicules de la part d'utilisateurs (8) afin de permettre une affectation des véhicules aux utilisateurs (8) en fonction de ces demandes.

3. Système selon la revendication 2, dans lequel le serveur distant (7) est configuré pour émettre l'ordre d'autorisation (103) si, à l'heure de réception du message (102), le véhicule (3) identifié par le deuxième moyen d'identification (10) est affecté à l'utilisateur (8) identifié par le premier moyen d'identification (9).

4. Système selon l'une quelconque des revendications 1 à 3, dans lequel le message (102) est envoyé à l'aide du téléphone portable (9) de l'utilisateur (8), le premier moyen d'identification étant le numéro de téléphone du téléphone portable (9) de l'utilisateur et le deuxième moyen d'identification (10) étant un numéro d'identification du véhicule (3) ou une photo d'une partie du véhicule (3).

5. Système selon l'une des revendications 1 à 4, dans lequel les moyens de communication (6) équipant le véhicule sont configurés pour transmettre après réception dudit ordre d'autorisation de serveur (103) un ordre de déverrouillage (104) auxdits moyens de déverrouillage (2), les moyens de déverrouillage (2) étant configurés pour envoyer un ordre d'arrêt de protection (101) au système de contrôle (1) seulement s'ils reçoivent l'ordre de déverrouillage (104).

6. Système selon la revendication 5, dans lequel les moyens de déverrouillage (2) du système de contrôle (1) sont configurés pour déverrouiller l'habitacle du véhicule lorsqu'ils reçoivent l'ordre de déverrouillage (104).

7. Système selon l'une quelconque des revendications 1 à 6, dans lequel pour authentifier le serveur distant auprès des moyens de déverrouillage (2), le serveur distant est authentifié auprès des moyens de communication (6) puis les moyens de communication (6) sont authentifiés auprès des moyens de déverrouillage (2).

8. Système selon quelconque l'une des revendications 1 à 7, dans lequel les moyens (2) de déverrouillage sont authentifiés auprès du système de contrôle du moteur (1).

9. Système selon l'une quelconque des revendications 1 à 8, comprenant des moyens de détection (5) d'une clé authentifiée (4) configurés pour émettre un ordre d'autorisation de clé (100) et dans lequel les moyens de déverrouillage (2) sont configurés pour envoyer l'ordre d'arrêt de la protection (101) au système de contrôle (1) seulement s'ils reçoivent l'ordre d'autorisation de clé (100).

10. Système selon l'une quelconque des revendications 5 à 9, dans lequel l'un au moins des messages est crypté dans l'ensemble comprenant le message de l'utilisateur (102), l'ordre d'autorisation de serveur (103), l'ordre de déverrouillage (104), l'ordre d'autorisation de clé (100) et l'ordre d'arrêt de la protection (101).

11. Système selon l'une des revendications 1 à 10, dans lequel le serveur distant (7) est configuré pour émettre l'ordre d'autorisation (103) seulement s'il reçoit le message (102) de la part de l'utilisateur (8).

12. Procédé de protection d'un véhicule automobile (3) équipé d'un moteur comprenant :
- une étape d'émission d'un ordre d'autorisation (44) de serveur (103) émis par un serveur distant (7);
- une étape de réception (45) au sein du véhicule de l'ordre d'autorisation de serveur (103) suivi d'une communication (46) pour déverrouiller le système de contrôle du moteur (1),
**caractérisé en ce que** le procédé comprend en outre une étape d'émission (41) par l'utilisateur d'un message (102) comprenant un premier moyen d'identification pour identifier l'utilisateur (8) et un deuxième moyen d'identification (10) pour identifier un véhicule (3), l'étape d'émission de l'ordre d'autorisation (103) n'étant réalisée que si le serveur distant (7) reçoit ledit message (102) comprenant les deux moyens d'identification et si le véhicule (3) identifié par le deuxième moyen d'identification (10) est attribuable à l'utilisateur (3) identifié par le premier moyen d'identification (9), et **en ce que** le procédé comprend en outre une étape (36) d'authentification comprenant :
- une étape (51) de demande d'authentification envoyée de la part d'un système de déverrouillage vers des moyens de communication (6),
- une étape (52) de demande d'authentification envoyée de la part des moyens de communication (6) vers le serveur distant (7),
- une étape (53) d'envoi d'un matériel d'authentification par le serveur distant (7) aux moyens de communication (6) à l'issu de laquelle le serveur distant (7) est authentifié auprès des moyens de communication (6),
- une étape (54) d'envoi d'un matériel d'authentification par les moyens de communication (6) au système de déverrouillage (2), à l'issu de laquelle les moyens de communication (6) sont authentifiés auprès du système de déverrouillage (2), le serveur distant (7) étant authentifié auprès du système de déverrouillage (2) par une chaîne de confiance s'étendant du système de déverrouillage (2) au serveur distant (7).

## Patentansprüche

1. Schutzsystem für ein mit einem Motor ausgestattetes Kraftfahrzeug (3), welches umfasst:
- einen entfernten Server (7) zum Senden eines Server-Autorisierungsbefehls (103);
- ein System zur Steuerung des Betriebs (1) des Motors;
- Mittel (2) zur Entriegelung des Systems zur Steuerung des Betriebs des Motors; und
- Kommunikationsmittel (6), mit denen das Fahrzeug ausgestattet ist und die dafür ausgelegt sind, den Server-Autorisierungsbefehl (103) zu empfangen und mit den Entriegelungsmitteln (2) zu kommunizieren, **dadurch gekennzeichnet, dass** der entfernte Server (7) dafür ausgelegt ist, den Autorisierungsbefehl (103) nur dann zu senden, wenn er eine Nachricht (102) empfängt, die ein erstes Identifizierungsmittel (9) zum Identifizieren des Benutzers (8) und ein zweites Identifizierungsmittel (10) zum Identifizieren des Fahrzeugs (3) umfasst, und wenn das durch das zweite Identifizierungsmittel (10) identifizierte Fahrzeug (3) dem durch das erste Identifizierungsmittel (9) identifizierten Benutzer (8) zuordenbar ist, und dadurch, dass der entfernte Server an den Entriegelungsmitteln (2) authentifiziert werden kann, wobei die Entriegelungsmittel (2) dafür ausgelegt sind, den Befehl zur Aufhebung des Schutzes (101) nur dann an das Steuerungssystem zu senden, wenn der entfernte Server (7) authentifiziert ist.

2. System nach Anspruch 1, wobei der entfernte Server (7) dafür ausgelegt ist, Fahrzeugmietanfragen von Benutzern (8) zu empfangen, um eine Zuweisung der Fahrzeuge zu den Benutzern (8) in Abhängigkeit von diesen Anfragen zu ermöglichen.

3. System nach Anspruch 2, wobei der entfernte Server (7) dafür ausgelegt ist, den Autorisierungsbefehl (103) zu senden, falls zum Zeitpunkt des Empfangs der Nachricht (102) das durch das zweite Identifizierungsmittel (10) identifizierte Fahrzeug (3) dem durch das erste Identifizierungsmittel (9) identifizierten Benutzer (8) zugewiesen ist.

4. System nach einem der Ansprüche 1 bis 3, wobei die Nachricht (102) mithilfe des Mobiltelefons (9) des Benutzers (8) gesendet wird, wobei das erste Identifizierungsmittel die Telefonnummer des Mobiltelefons (9) des Benutzers ist und das zweite Identifizierungsmittel (10) eine Identifikationsnummer des Fahrzeugs (3) oder ein Foto eines Teils des Fahrzeugs (3) ist.

5. System nach einem der Ansprüche 1 bis 4, wobei die Kommunikationsmittel (6), mit denen das Fahrzeug ausgestattet ist, dafür ausgelegt sind, nach Empfang des Server-Autorisierungsbefehls (103) einen Entriegelungsbefehl (104) an die Entriegelungsmittel (2) zu übertragen, wobei die Entriegelungsmittel (2) dafür ausgelegt sind, einen Befehl zur Aufhebung des Schutzes (101) nur dann an das Steuerungssystem (1) zu senden, wenn sie den Entriegelungsbefehl (104) empfangen.

6. System nach Anspruch 5, wobei die Mittel zur Entriegelung (2) des Steuerungssystems (1) dafür ausgelegt sind, den Innenraum des Fahrzeugs zu entriegeln, wenn sie den Entriegelungsbefehl (104) empfangen.

7. System nach einem der Ansprüche 1 bis 6, wobei zum Authentifizieren des entfernten Servers an den Entriegelungsmitteln (2) der entfernte Server an den Kommunikationsmitteln (6) authentifiziert wird und anschließend die Kommunikationsmittel (6) an den Entriegelungsmitteln (2) authentifiziert werden.

8. System nach einem der Ansprüche 1 bis 7, wobei die Entriegelungsmittel (2) am Steuerungssystem des Motors (1) authentifiziert werden.

9. System nach einem der Ansprüche 1 bis 8, welches Mittel zur Erkennung (5) eines authentifizierten Schlüssels (4) umfasst, die dafür ausgelegt sind, einen Schlüssel-Autorisierungsbefehl (100) zu senden, und wobei die Entriegelungsmittel (2) dafür ausgelegt sind, den Befehl zur Aufhebung des Schutzes (101) nur dann an das Steuerungssystem (1) zu senden, wenn sie den Schlüssel-Autorisierungsbefehl (100) empfangen.

10. System nach einem der Ansprüche 5 bis 9, wobei wenigstens eine der Nachrichten in der Menge, welche die Nachricht des Benutzers (102), den Server-Autorisierungsbefehl (103), den Entriegelungsbefehl (104), den Schlüssel-Autorisierungsbefehl (100) und den Befehl zur Aufhebung des Schutzes (101) umfasst, verschlüsselt ist.

11. System nach einem der Ansprüche 1 bis 10, wobei der entfernte Server (7) dafür ausgelegt ist, den Autorisierungsbefehl (103) nur dann zu senden, wenn er die Nachricht (102) vom Benutzer (8) empfängt.

12. Verfahren zum Schutz eines mit einem Motor ausgestatteten Kraftfahrzeugs (3), welches umfasst:
- einen Schritt des Sendens (44) eines Server-Autorisierungsbefehls (103), der von einem entfernten Server (7) gesendet wird;
- einen Schritt des Empfangs (45) des Server-Autorisierungsbefehls (103) innerhalb des Fahrzeugs, gefolgt von einer Kommunikation (46) zum Entriegeln des Steuerungssystems des Motors (1), **dadurch gekennzeichnet, dass** das Verfahren außerdem einen Schritt des Sendens (41) einer Nachricht (102) durch den Benutzer umfasst, die ein erstes Identifizierungsmittel zum Identifizieren des Benutzers (8) und ein zweites Identifizierungsmittel (10) zum Identifizieren des Fahrzeugs (3) umfasst, wobei der Schritt des Sendens des Autorisierungsbefehls (103) nur dann durchgeführt wird, wenn der entfernte Server (7) die Nachricht (102) empfängt, welche die zwei Identifizierungsmittel umfasst, und wenn das durch das zweite Identifizierungsmittel (10) identifizierte Fahrzeug (3) dem durch das erste Identifizierungsmittel (9) identifizierten Benutzer (3) zuordenbar ist, und dadurch, dass das Verfahren außerdem einen Schritt (36) der Authentifizierung umfasst, welche umfasst:
- einen Schritt (51) einer Authentifizierungsanfrage, die von einem Entriegelungssystem an Kommunikationsmittel (6) gesendet wird,
- einen Schritt (52) einer Authentifizierungsanfrage, die von den Kommunikationsmitteln (6) an den entfernten Server (7) gesendet wird,
- einen Schritt (53) des Sendens eines Authentifizierungsmittels durch den entfernten Server (7) an die Kommunikationsmittel (6), nach welchem der entfernte Server (7) an den Kommunikationsmitteln (6) authentifiziert ist,
- einen Schritt (54) des Sendens eines Authentifizierungsmittels durch die Kommunikationsmittel (6) an das Entriegelungssystem (2), nach welchem die Kommunikationsmittel (6) an dem Entriegelungssystem (2) authentifiziert sind, wobei der entfernte Server (7) an dem Entriegelungssystem (2) durch eine Vertrauenskette authentifiziert wird, die sich von dem Entriegelungssystem (2) bis zu dem entfernten Server (7) erstreckt.

## Claims

1. System for protecting a motor vehicle (3) equipped with an engine including:
- a remote server (7) to transmit a server authorization command (103);
- an engine operation control system (1);
- means (2) for unlocking the engine operation control system; and
- communication means (6) fitted in the vehicle, configured to receive said server authorization command (103) and communicate with the unlocking means (2),
**characterized in that** the remote server (7) is configured to transmit the authorization command (103) only if it receives a message (102) including a first identification means (9) to identify the user (8) and a second identification means (10) to identify a vehicle (3) and if the vehicle (3) identified by the second identification means (10) is attributable to the user (8) identified by the first identification means (9) and **in that** the remote server can be authenticated to the unlocking means (2), the unlocking means (2) being configured to send the protection deactivation command (101) to the control system only if the remote server (7) is authenticated.

2. System according to Claim 1, in which the remote server (7) is configured to receive vehicle hire requests from users (8) in order to enable an allocation of vehicles to users (8) according to these requests.

3. System according to Claim 2, in which the remote server (7) is configured to transmit the authorization command (103) if, at the time of reception of the message (102), the vehicle (3) identified by the second identification means (10) is assigned to the user (8) identified by the first identification means (9).

4. System according to any one of Claims 1 to 3, in which the message (102) is transmitted by means of the cellphone (9) of the user (8), the first identification means being the telephone number of the cellphone (9) of the user and the second identification means (10) being an identification number of the vehicle (3) or a photo of a part of the vehicle (3).

5. System according to one of Claims 1 to 4, in which the communication means (6) fitted in the vehicle are configured to transmit, following the reception of said server authorization command (103), an unlocking command (104) to said unlocking means (2), the unlocking means (2) being configured to send a protection deactivation command (101) to the control system (1) only if they receive the unlocking command (104) .

6. System according to Claim 5, in which the unlocking means (2) of the control system (1) are configured to unlock the passenger compartment of the vehicle when they receive the unlocking command (104).

7. System according to any one of Claims 1 to 6, in which, in order to authenticate the remote server to the unlocking means (2), the remote server is authenticated to the communication means (6) then the communication means (6) are authenticated to the unlocking means (2).

8. System according to any one of Claims 1 to 7, in which the unlocking means (2) are authenticated to the engine control system (1).

9. System according to any one of Claims 1 to 8, including means (5) for detecting an authenticated key (4) configured to transmit a key authorization command (100) and in which the unlocking means (2) are configured to send the protection deactivation command (101) to the control system (1) only if they receive the key authorization command (100).

10. System according to any one of Claims 5 to 9, in which at least one of the messages is encrypted in the set including the message from the user (102), the server authorization command (103), the unlocking command (104), the key authorization command (100) and the protection deactivation command (101).

11. System according to one of Claims 1 to 10, in which the remote server (7) is configured to transmit the authorization command (103) only if it receives the message (102) from the user (8).

12. Method for protecting a motor vehicle (3) equipped with an engine including:
- a step of transmitting (44) a server authorization command (103) transmitted by a remote server (7);
- a step of receiving (45) the server authorization command (103) within the vehicle, followed by a communication (46) to unlock the engine control system (1),
**characterized in that** the method furthermore includes a step of transmitting (41) by the user a message (102) including a first identification means to identify the user (8) and a second identification means (10) to identify a vehicle (3), the step of transmitting the authorization command (103) being carried out only if the remote server (7) receives said message (102) including the two identification means and if the vehicle (3) identified by the second identification means (10) is attributable to the user (3) identified by the first identification means (9), and **in that** the method further includes an authentication step (36) including
- a step (51) comprising an authentication request sent from an unlocking system to communication means (6),
- a step (52) comprising an authentication request sent from the communication means (6) to the remote server (7),
- a step (53) of dispatch of an authentication material by the remote server (7) to the communication means (6), at the end of which the remote server (7) is authenticated to the communication means (6),
- a step (54) of dispatch of an authentication material by the communication means (6) to the unlocking system (2), at the end of which the communication means (6) are authenticated to the unlocking system (2), the remote server (7) being authenticated to the unlocking system (2) by a chain of trust which extends from the unlocking system (2) to the remote server (7).
